# EUROPEAN PATENT APPLICATION

(11) **EP 4 351 214 A1**
(43) Date of publication of application: **10.04.2024**
(21) Application number: 22831697.2
(22) Date of filing: 15.06.2022
(51) Int. Cl.: H04W 36/00, H04W 36/08, H04W 36/30

(54) **METHOD FOR DETERMINING RESELECTION DETERMINATION PARAMETER, AND CELL RESELECTION METHOD**

(30) Priority: 30.06.2021 CN 202110738081
(71) Applicant: Sanechips Technology Co., Ltd., Shenzhen, Guangdong 518055 (CN)
(72) Inventor: JI, Hao, Shenzhen, Guangdong 518055 (CN)
(74) Representative: Canzler & Bergmeier Patentanwälte Partnerschaft mbB
(86) International application number: PCT/CN2022/098814
(87) International publication number: WO 2023/273878

(57) **Abstract**

Provided in the present disclosure is a method for determining a reselection determination parameter. The method comprises: acquiring measurement information of a neighboring cell of a cell where a user equipment (UE) currently resides; performing normalization processing of a pre-determined rule on the acquired measurement information, and obtaining a reselection determination parameter, wherein the reselection determination parameter meets a pre-determined requirement, and a reselection determination parameter obtained after normalization processing of the pre-determined rule is performed on cell data of at least one standard can meet the pre-determined requirement. Further provided in the present disclosure are a cell reselection method, an electronic device and a computer-readable storage medium.

## Description

### CROSS-REFERENCE TO RELATED APPLICATIONS

This application claims priority to patent application No. 202110738081.5 filed with the China Patent Office on June 30, 2021, which is incorporated by reference hereby in its entirety.

### TECHNICAL FIELD

The present disclosure relates to, but is not limited to, the technical field of communications.

### BACKGROUND

With the deployment of the 5th generation (5G) mobile networks, more and more user equipments (UEs) of 5G system have come into the market. Due to a relatively high frequency band of the 5G network and a relatively small cell coverage area, a UE is desired to reselect and camp on a 4th generation (4G) mobile network in an area without coverage of the 5G network. In an area covered by the 5G network, if a higher speed is desired, the UE may select and camp on the 5G network. Therefore, a modem baseband chip of the UE is desired to support both 5G and 4G systems, as well as multi-mode interoperability between the two systems.

### SUMMARY

The present disclosure provides a method for determining a reselection determination parameter, a method and apparatus for cell reselection, a computer-readable medium, and a chip.

In a first aspect, the present disclosure provides a method for determining a reselection determination parameter, including: acquiring measurement information of a neighboring cell of a cell where a user equipment (UE) is currently camping; performing normalization processing of a predetermined rule on the acquired measurement information, and obtaining a reselection determination parameter that meets a predetermined requirement, wherein a reselection determination parameter obtained by performing the normalization processing of the predetermined rule on cell data of at least one system meets the predetermined requirement.

In a second aspect, the present disclosure provides a method for cell reselection, including: acquiring a reselection determination parameter of each target frequency point, wherein the reselection determination parameter is a reselection determination parameter obtained in the method for determining a reselection determination parameter according to the first aspect of the present disclosure; calculating, according to the reselection determination parameter, an evaluation value of each target frequency point; evaluating the evaluation value of the target frequency point according to a predetermined determination rule, and determining candidate cells for each target frequency point; and determining a reselected cell from the candidate cells.

In a third aspect, the present disclosure provides an electronic device, including: one or more processors; a memory having one or more programs stored thereon which, when executed by the one or more processors, cause the one or more processors to implement the method according to the first or second aspect of the present disclosure; one or more I/O interfaces connected between the processors and the memory, and configured to enable information interaction between the processors and the memory.

In a fourth aspect, the present disclosure provides a computer-readable medium storing a computer program thereon which, when executed by a processor, causes the method according to the first or second aspect of the present disclosure to be implemented.

### BRIEF DESCRIPTION OF DRAWINGS

FIG. 1 is a schematic flowchart showing an exemplary implementation of a method for determining a reselection determination parameter according to the present disclosure;
FIG. 2 is a flowchart of an exemplary implementation of operation S 110;
FIG. 3 is a flowchart of an exemplary implementation of a method for cell reselection according to the present disclosure;
FIG. 4 is a schematic block diagram of an electronic device according to the present disclosure; and
FIG. 5 is a schematic diagram of a computer-readable medium according to the present disclosure.

### DETAIL DESCRIPTION OF EMBODIMENTS

To improve understanding of the technical solution of the present disclosure for those skilled in the art, the technical solution of the present disclosure will be described below in detail in conjunction with the accompanying drawings and exemplary implementations.

Example implementations will be described more sufficiently below with reference to the accompanying drawings, and the illustrated example implementations may be embodied in different forms and should not be construed as limited to the implementations set forth herein. Rather, these implementations are provided so that the present disclosure will be thorough and complete, and will fully convey the scope of the present disclosure to those skilled in the art.

Embodiments of the present disclosure and features thereof may be combined with each other without conflict.

As used herein, the term "and/or" includes any and all combinations of one or more of the associated listed items.

The terminology used herein is for the purpose of describing specific implementations only and is not intended to limit the present disclosure. As used herein, the singular forms "a", "an" and "the" are intended to include the plural forms as well, unless the context clearly indicates otherwise. It will be further understood that as used herein, the terms "comprise" and/or "made of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

When a modem baseband chip of 4G system is desired to support the 5G system, reselection determination modules of the 5G and 4G systems are required to be designed respectively, and codes and processing logics corresponding to functions of 5G system are required to be added, which may increase the design complexity of the multimode radio control layer for the 5G and 4G, as well as the memory space desired for operation of the modem baseband chip.

According to the method for determining a reselection determination parameter and the method for cell reselection of the present disclosure, a universal method is adopted to implement multi-system normalized reselection determination of a multi-mode user equipment in camping on 5G or 4G system cell, which can simplify the design complexity of the multimode radio control layer for the 5G and 4G and reduce the memory space desired for operation of the modem baseband chip.

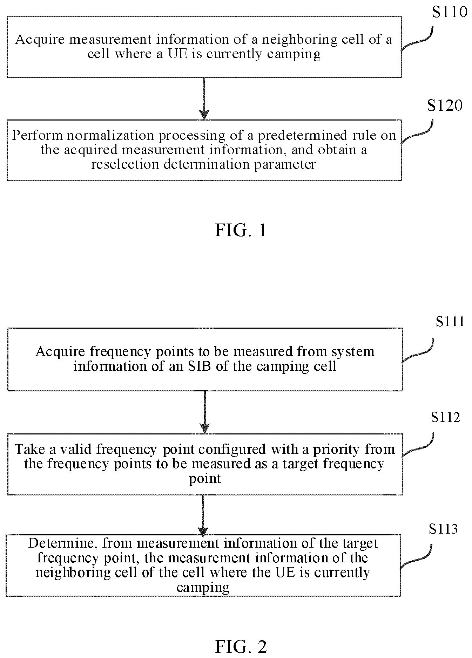

In a first aspect, the present disclosure provides a method for determining a reselection determination parameter which, as shown in FIG. 1, may include the following operations S110 and S 120.

At operation S110, measurement information of a neighboring cell of a cell where a user equipment (UE) is currently camping is acquired, where the measurement information is used for determining the reselection determination parameter. At operation S 120, normalization processing of a predetermined rule is performed on the acquired measurement information, and obtaining a reselection determination parameter that meets a predetermined requirement, where a reselection determination parameter obtained by performing the normalization processing of the predetermined rule on cell data of at least one system meets the predetermined requirement.

This determination method of the present disclosure may be used with the method for cell reselection provided in the second aspect of the present disclosure.

During cell reselection, a co-system or inter-system neighboring cell may be selected. In the present disclosure, the acquired measurement information is normalized before determining the reselected cell. When the measurement information includes data of cells of different systems, the reselection determination parameter of all the cells meets the predetermined requirement. Therefore, when a reselected cell is determined in the method for cell reselection provided in the second aspect of the present disclosure, cell reselection may be performed without considering the difference in the measurement data of cells of different systems.

The modem chip can be simply extended through software, instead of hardware, to execute the determination method and the method for cell reselection of the present disclosure, thereby reducing the cost of the modem chip.

In the present disclosure, how to acquire the measurement information of the neighboring cell of the cell where the UE is currently camping is not particularly limited. As an exemplary implementation, as shown in FIG. 2, the operation S 110 of acquiring the measurement information of the neighboring cell of the cell where the UE is currently camping may include operations S111 to S 113.

At operation S111, frequency points to be measured are acquired from system information of a system information block (SIB) of the cell where the UE is currently camping.

At operation S112, a valid frequency point configured with a priority is taken from the frequency points to be measured as a target frequency point.

At operation S113, the measurement information of the neighboring cell of the cell where the UE is currently camping is determined from measurement information of the target frequency point.

In the present disclosure, only the measurement data (measurement information) of valid frequency point configured with a priority is processed, so that a total amount of data processing can be reduced, and the execution efficiency of the determination method is improved.

In the present disclosure, the type of the measurement information is not particularly limited. The measurement information to be acquired may be determined according to a reselection determination rule. For example, according to a reselection determination rule specified in the 3GPP protocol, parameters such as an S value, an R value, a reselection threshold, a cell evaluation duration, and a frequency point priority of a cell are desired in reselection determination. As will be understood by those skilled in the art, the S value described herein includes a cell selection RX level value Srexlv and a cell selection quality value Squal, and the R value described herein includes a cell-ranking criterion Rs for a serving cell and a cell-ranking criterion Rn for a neighboring cell.

For the cell evaluation time, the cell evaluation time carried in the measurement information of cells of different systems may differ in the accuracy. For example, for a cell of 5G system, the cell evaluation time in the measurement information thereof may be accurate to one decimal place, while for a cell of 4G system, the cell evaluation time in the measurement information thereof may be accurate to an integer. In this case, normalization of the cell evaluation time may be implemented by scaling. For the convenience of distinction, the cell evaluation time in the measurement information is referred to as original evaluation time, and the cell evaluation time in the reselection determination parameter is referred to as normalized evaluation time. Accordingly, in operation S120, the normalization processing on the original evaluation time may include: scaling the original evaluation time by a first predetermined multiple to obtain the normalized evaluation time, where cells of different systems have the same accuracy grade of normalized evaluation time.

In the present disclosure, the first predetermined multiple is not particularly limited, as long as the normalized evaluation time obtained by performing normalization processing on the evaluation time of cells of different systems has the same accuracy grade (for example, a value of each normalized evaluation time is an integer).

The S value of a cell is to be calculated from increment parameters carried in the measurement information. For cells of different systems, the increment parameters used for calculating the S value in the measurement information may differ in the positive or negative property. For example, for a cell of 5G system, each increment parameter used for calculating the S value in the measurement information may be a positive value, while for a cell of 4G system, the increment parameters used for calculating the S value in the measurement information may have positive and/or negative values. In this case, calculation of the increment parameters for calculating the S value may be implemented by adding an offset. For the convenience of distinction, each increment parameter used for calculating the S value in the measurement information is referred to as an original first parameter, and accordingly, the reselection determination parameter includes a normalized first increment parameter. The S value calculated from the original first parameter is referred to as an initial S value. Accordingly, in operation S120, the normalization processing on the original first parameters may include: adding all the original first parameters to obtain a first parameter sum, which is then added with a first offset to obtain the normalized first increment parameter, where the normalized first increment parameter has a positive value, and cells of different systems correspond to the same first offset.

In the present disclosure, the magnitude of the first offset is not particularly limited, as long as the original first parameters and the first offset in different system are added to obtain a positive value.

Similarly, the R value of a cell is to be calculated from increment parameters carried in the measurement information. For cells of different systems, the increment parameters used for calculating the R value in the measurement information may differ in the positive or negative property. For example, for a cell of 5G system, each increment parameter used for calculating the R value in the measurement information may be a positive value, while for a cell of 4G system, the increment parameters used for calculating the R value in the measurement information may have positive and/or negative values. In this case, calculation of the increment parameters for calculating the R value may be implemented by adding an offset. For the convenience of distinction, each increment parameter used for calculating the R value in the measurement information is referred to as an original second parameter, and accordingly, the reselection determination parameter includes a normalized second increment parameter. The R value calculated from the original second parameter is referred to as an original R value. Correspondingly, in operation S120, the normalization processing on the original second parameters may include: adding all the original second parameters to obtain a second parameter sum, which is then added with a second offset to obtain the normalized second increment parameter, where the normalized second increment parameter has a positive value, and cells of different systems correspond to the same second offset.

In the present disclosure, the magnitude of the second offset is not particularly limited, as long as the original second parameters and the second offset in different system are added to obtain a positive value.

For cells of different systems, the reselection thresholds may also differ in positive or negative property. Here, it should be noted that the "reselection threshold" includes an S-value reselection threshold and an R-value reselection threshold.

For convenience of description, the reselection threshold in the measurement information is referred to as an original reselection threshold, the reselection threshold in the reselection determination parameter is referred to as a normalized reselection threshold, and in the operation S120 of performing normalization processing of the predetermined rule on the acquired measurement information, the normalization processing on the original reselection threshold may include: adding the original reselection threshold with a third offset to obtain the normalized reselection threshold, where the normalized reselection threshold has a positive value, and cells of different systems correspond to the same third offset.

It should be noted that the S value and the R value correspond to different reselection thresholds.

Further, the original reselection threshold includes: a co-frequency original reselection threshold and/or an inter-frequency original reselection threshold.

In terms of the priority, cells of different systems have different accuracy grades of priority. For convenience of description, the priority of the frequency point carried in the measurement information is referred to as an original priority, the priority in the reselection determination parameter is referred to as a normalized priority, and in the operation S120 of performing normalization processing of the predetermined rule on the acquired measurement information, the normalization processing on the original priority may include: scaling the original priority by a second predetermined multiple to obtain a normalized priority, where cells of different systems correspond to the same second predetermined multiple, and have the same accuracy grade of normalized priority.

To facilitate data processing, in an exemplary implementation, the determination method may further include operation S130. At operation S130, data assembly is performed on reselection determination parameters of respective frequency points, to store the reselection determination parameters in a cache.

It should be noted that operations S110 to S130 are performed for each frequency point until the measurement data of all target frequency points are processed.

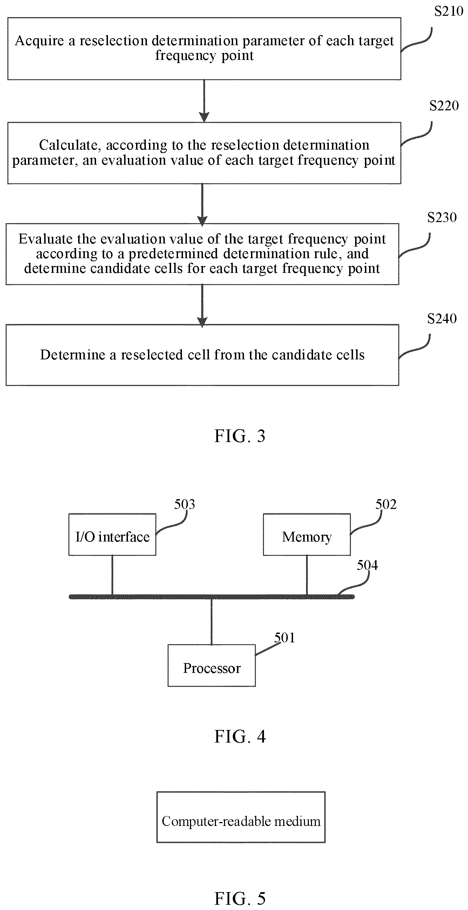

In a second aspect, a method for cell reselection is provided, which, as shown in FIG. 3, may include operations S210 to S240.

At operation S210, a reselection determination parameter of each target frequency point is acquired, where the reselection determination parameter is a reselection determination parameter obtained in the method for determining a reselection determination parameter according to the first aspect of the present disclosure.

At operation S220, an evaluation value of each target frequency point is calculated according to the reselection determination parameter.

At operation S230, the evaluation value of the target frequency point is evaluated according to a predetermined determination rule, and candidate cells for each target frequency point are determined.

At operation S240, a reselected cell is determined from the candidate cells.

As described above, since the reselection determination parameter has been subjected to normalization processing, it is no longer affected by the system of the cell, and the method of the present disclosure may be used for cell reselection regardless of the system of the cell where the measurement data is obtained.

Here, the evaluation value may be an evaluation value required for determination according to a predetermined rule. When the predetermined rule is a 3GPP rule, the evaluation value may include an S value and an R value.

When the evaluation value includes a normalized S value, the reselection determination parameter includes a normalized first increment parameter, a normalized evaluation time, and a normalized reselection threshold.

Accordingly, calculating the normalized S value from the normalized first increment parameter includes: adding the normalized first increment parameter with a first measurement value to obtain the normalized S value.

For any target frequency point, evaluating the evaluation value of the target frequency point according to the predetermined rule includes: determining whether a normalized S value of a neighboring cell exceeds a corresponding normalized reselection threshold within the normalized evaluation time; and taking the neighboring cell with the normalized S value exceeding the corresponding normalized reselection threshold as one of the candidate cells.

It should be noted that the first measurement value refers to a parameter value obtained by measurement at a physical layer and used for calculating the S value.

When the evaluation value includes a normalized R value, the reselection determination parameter includes a normalized second increment parameter, a normalized evaluation time, and a normalized reselection threshold.

Accordingly, calculating the normalized R value from the normalized second increment parameter includes: adding the normalized second increment parameter with a second measurement value to obtain the normalized R value.

For any target frequency point, evaluating the evaluation value of the target frequency point according to the predetermined rule includes: determining whether a normalized R value of a neighboring cell exceeds a corresponding normalized reselection threshold within the normalized evaluation time; and taking a neighboring cell with the normalized R value exceeding the corresponding normalized reselection threshold as one of the candidate cells.

The second measurement value is a parameter value obtained by measurement at a physical layer and used for calculating the R value.

When a plurality of candidate cells are obtained, the operation of determining the reselected cell from the candidate cells includes: taking a cell with the highest normalized priority as the reselected cell.

The determination method according to the first aspect of the present disclosure and the method according to the second aspect of the present disclosure will be described below with reference to two exemplary implementations.

### First exemplary implementation

The cell where the UE is currently camping is a 5G system cell.

The determination method according to the first aspect of the present disclosure is performed first, including: acquiring, according to 5 pieces of system information of system information blocks 1/2/3/4/5 in the cell where the UE is currently camping, measurement information of a co-frequency neighboring cell, an inter-frequency neighboring cell, and a 4G inter-system neighboring cell of the cell, where the measurement information includes parameters such as a plurality of original first parameters used for calculating an original S value, a plurality of original second parameters used for calculating an original R value, an original priority of each frequency point, a co-frequency original reselection threshold value (including a co-frequency original reselection threshold for the S value, and a co-frequency original reselection threshold for the R value), and an inter-frequency original reselection threshold (including an inter-frequency original reselection threshold for the S value, and an inter-frequency original reselection threshold for the R value).

For each target frequency point, the plurality of original first parameters are added to obtain a first parameter sum, which is then added with a first offset, thereby obtaining a normalized first increment parameter.

For each target frequency point, the plurality of original second parameters are added to obtain a second parameter sum, which is then added with a second offset, thereby obtaining a normalized second increment parameter.

For each target frequency point, the four reselection thresholds are added with respective third offsets to obtain four normalized reselection thresholds.

For each target frequency point, the original evaluation time is magnified by a first predetermined multiple to obtain normalized original evaluation time.

For each frequency point, the original priority is magnified by a second predetermined multiple to obtain a normalized priority.

Subsequently, the method for cell reselection according to the second aspect of the present disclosure is performed, including: acquiring each reselection determination parameter; performing calculations to obtain a normalized S value and a normalized R value; and judging either the normalized S value or the normalized R value according to a 3GPP principle to determine the reselected cell, which includes the following operations.

For any target frequency point, evaluating the evaluation value of the target frequency point according to the predetermined rule includes: determining whether a normalized S value of a neighboring cell exceeds a corresponding normalized reselection threshold within the normalized evaluation time; and taking the neighboring cell with the normalized S value exceeding the corresponding normalized reselection threshold as one of the candidate cells.

For any target frequency point, evaluating the evaluation value of the target frequency point according to the predetermined rule includes: determining whether a normalized R value of a neighboring cell exceeds a corresponding normalized reselection threshold within the normalized evaluation time; and taking a neighboring cell with the normalized R value exceeding the corresponding normalized reselection threshold as one of the candidate cells.

When a plurality of candidate cells are obtained, the operation of determining the reselected cell from the candidate cells includes: taking a cell with the highest normalized priority as the reselected cell.

### Second exemplary implementation

The cell where the UE is currently camping is a 4G system cell.

The determination method according to the first aspect of the present disclosure is performed first, including: acquiring, according to 5 pieces of system information of system information blocks 1/3/5/6/7 in the cell where the UE is currently camping, measurement information of a co-frequency neighboring cell, an inter-frequency neighboring cell, and a 5G inter-system neighboring cell of the cell, where the measurement information includes parameters such as a plurality of original first parameters used for calculating an original S value, a plurality of original second parameters used for calculating an original R value, an original priority of each frequency point, a co-frequency original reselection threshold value (including a co-frequency original reselection threshold for the S value, and a co-frequency original reselection threshold for the R value), and an inter-frequency original reselection threshold (including an inter-frequency original reselection threshold for the S value, and an inter-frequency original reselection threshold for the R value).

For each target frequency point, the plurality of original first parameters are added to obtain a first parameter sum, which is then added with a first offset, thereby obtaining a normalized first increment parameter.

For each target frequency point, the plurality of original second parameters are added to obtain a second parameter sum, which is then added with a second offset, thereby obtaining a normalized second increment parameter.

For each target frequency point, the four reselection thresholds are added with respective third offsets to obtain four normalized reselection thresholds.

For each target frequency point, the original evaluation time is magnified by a first predetermined multiple to obtain normalized original evaluation time.

For each frequency point, the original priority is magnified by a second predetermined multiple to obtain a normalized priority.

Subsequently, the method for cell reselection according to the second aspect of the present disclosure is performed, including: acquiring each reselection determination parameter; performing calculations to obtain a normalized S value and a normalized R value; and judging either the normalized S value or the normalized R value according to a 3GPP principle to determine the reselected cell, which includes the following operations.

For any target frequency point, evaluating the evaluation value of the target frequency point according to the predetermined rule includes: determining whether a normalized S value of a neighboring cell exceeds a corresponding normalized reselection threshold within the normalized evaluation time; and taking the neighboring cell with the normalized S value exceeding the corresponding normalized reselection threshold as one of the candidate cells.

For any target frequency point, evaluating the evaluation value of the target frequency point according to the predetermined rule includes: determining whether a normalized R value of a neighboring cell exceeds a corresponding normalized reselection threshold within the normalized evaluation time; and taking a neighboring cell with the normalized R value exceeding the corresponding normalized reselection threshold as one of the candidate cells.

When a plurality of candidate cells are obtained, the operation of determining the reselected cell from the candidate cells includes: taking a cell with the highest normalized priority as the reselected cell.

In a third aspect, as shown in FIG. 4, the present disclosure provides an apparatus, including: one or more processors 501; a memory 502 having one or more programs stored thereon which, when executed by the one or more processors, cause the one or more processors to implement any one of the methods according to the first or second aspect as described above; and one or more I/O interfaces 503 connected between the processors 501 and the memory 502, and configured to enable information interaction between the processors and the memory.

Each processor 501 is a device with a data processing capability, including but not limited to a central processing unit (CPU), or the like; the memory 502 is a device with a data storage capability, including but not limited to, a random access memory (RAM, such as SDRAM, DDR, etc.), a read only memory (ROM), an electrically erasable programmable read only memory (EEPROM) or a flash memory (FLASH); and the I/O interface (read/write interface) 503 is connected between the processors 501 and the memory 502 to enable information interaction between the processors 501 and the memory 502, and includes, but is not limited to, a bus or the like.

In some implementations, the processors 501, the memory 502, and the I/O interface 503 are interconnected via a bus 504, and further connected to other components of a computing device.

In a fourth aspect, as shown in FIG. 5, the present disclosure provides a computer-readable medium storing a computer program thereon which, when executed by a processor, causes any one of the methods according to the first or second aspect as described above to be implemented.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary implementations, and although specific terms are employed, they are used and should be interpreted in a generic and descriptive sense only and not for purposes of limitation. In some instances, as would be apparent to one skilled in the art, features, characteristics and/or elements described in connection with a particular implementation may be used alone or in combination with features, characteristics and/or elements described in connection with another implementation, unless expressly stated otherwise. It will, therefore, be understood by those skilled in the art that various changes in form and details may be made therein without departing from the scope of the present disclosure as set forth in the appended claims.

## Claims

1. A method for determining a reselection determination parameter, comprising:
acquiring measurement information of a neighboring cell of a cell where a user equipment (UE) is currently camping;
performing normalization processing of a predetermined rule on the acquired measurement information, and obtaining a reselection determination parameter that meets a predetermined requirement, wherein a reselection determination parameter obtained by performing the normalization processing of the predetermined rule on cell data of at least one system meets the predetermined requirement.

2. The method according to claim 1, wherein acquiring measurement information of the neighboring cell of a cell where the UE is currently camping comprises:
acquiring frequency points to be measured from system information of a system information block (SIB) of the cell where the UE is currently camping;
taking a valid frequency point configured with a priority from the frequency points to be measured as a target frequency point; and
determining, from measurement information of the target frequency point, the measurement information of the neighboring cell of the cell where the UE is currently camping.

3. The method according to claim 2, wherein for each target frequency point, the measurement information comprises original evaluation time, the reselection determination parameter comprises normalized evaluation time, and in the operation of performing normalization processing of the predetermined rule on the acquired measurement information, the normalization processing on the original evaluation time comprises:
scaling the original evaluation time by a first predetermined multiple to obtain the normalized evaluation time, wherein cells of different systems have the same accuracy grade of normalized evaluation time.

4. The method according to claim 2, wherein for each target frequency point, the measurement information comprises a plurality of original first parameters, the reselection determination parameter comprises a normalized first increment parameter, each original first parameter is used for calculating an initial S value of the target frequency point, and in the operation of performing normalization processing of the predetermined rule on the acquired measurement information, the normalization processing on the original first parameters comprises:
adding all the original first parameters to obtain a first parameter sum, which is then added with a first offset to obtain the normalized first increment parameter, wherein the normalized first increment parameter has a positive value, and cells of different systems correspond to the same first offset.

5. The method according to claim 2, wherein for each target frequency point, the measurement information comprises a plurality of original second parameters, the reselection determination parameter comprises a normalized second increment parameter, each original second parameter is used for calculating an initial R value of the target frequency point, and in the operation of performing normalization processing of the predetermined rule on the acquired measurement information, the normalization processing on the original second parameters comprises:
adding all the original second parameters to obtain a second parameter sum, which is then added with a second offset to obtain the normalized second increment parameter, wherein the normalized second increment parameter has a positive value, and cells of different systems correspond to the same second offset.

6. The method according to claim 2, wherein for each target frequency point, the measurement information comprises an original reselection threshold, the reselection determination parameter comprises a normalized reselection threshold, and in the operation of performing normalization processing of the predetermined rule on the acquired measurement information, the normalization processing on the original reselection threshold comprises:
adding the original reselection threshold with a third offset to obtain the normalized reselection threshold, wherein the normalized reselection threshold has a positive value, and cells of different systems correspond to the same third offset.

7. The method according to claim 6, wherein the original reselection threshold comprises: a co-frequency original reselection threshold and/or an inter-frequency original reselection threshold.

8. The method according to claim 2, wherein for each target frequency point, the measurement information comprises original priority, and in the operation of performing normalization processing of the predetermined rule on the acquired measurement information, the normalization processing on the original priority comprises:
scaling the original priority by a second predetermined multiple to obtain a normalized priority, wherein cells of different systems correspond to the same second predetermined multiple, and have the same accuracy grade of normalized priority.

9. The method according to any one of claims 1 to 8, further comprising:
performing data assembly on reselection determination parameters of respective frequency points, to store the reselection determination parameters in a cache.

10. A method for cell reselection, comprising:
acquiring a reselection determination parameter of each target frequency point, wherein the reselection determination parameter is a reselection determination parameter obtained in the method for determining a reselection determination parameter according to any one of claims 1 to 9;
calculating, according to the reselection determination parameter, an evaluation value of each target frequency point;
evaluating the evaluation value of the target frequency point according to a predetermined determination rule, and determining candidate cells for each target frequency point; and
determining a reselected cell from the candidate cells.

11. The method according to claim 10, wherein the reselection determination parameter comprises a normalized first increment parameter, a normalized evaluation time, and a normalized reselection threshold, and the evaluation value comprises a normalized S value, and
calculating the normalized S value from the normalized first increment parameter comprises:
adding the normalized first increment parameter with a first measurement value to obtain the normalized S value; and
for any target frequency point, evaluating the evaluation value of the target frequency point according to the predetermined rule comprises:
determining whether a normalized S value of a neighboring cell exceeds a corresponding normalized reselection threshold within the normalized evaluation time; and
taking the neighboring cell with the normalized S value exceeding the corresponding normalized reselection threshold as one of the candidate cells.

12. The method according to claim 10, wherein the reselection determination parameter comprises a normalized second increment parameter, a normalized evaluation time, and a normalized reselection threshold, and the evaluation value comprises a normalized R value, and
calculating the normalized R value from the normalized second increment parameter comprises:
adding the normalized second increment parameter with a second measurement value to obtain the normalized R value; and
for any target frequency point, evaluating the evaluation value of the target frequency point according to the predetermined rule comprises:
determining whether a normalized R value of a neighboring cell exceeds a corresponding normalized reselection threshold within the normalized evaluation time; and
taking a neighboring cell with the normalized R value exceeding the corresponding normalized reselection threshold as one of the candidate cells.

13. The method according to any of claims 10 to 12, wherein when a plurality of candidate cells are obtained, the operation of determining the reselected cell from the candidate cells comprises:
taking a cell with a highest normalized priority as the reselected cell.

14. An electronic device, comprising:
one or more processors;
a memory having one or more programs stored thereon which, when executed by the one or more processors, cause the one or more processors to implement the method according to any one of claims 1 to 9; or to implement the method according to any one of claims 10 to 13; and
one or more I/O interfaces connected between the processors and the memory, and configured to enable information interaction between the processors and the memory.

15. A computer-readable medium storing a computer program thereon which, when executed by a processor, causes the method according to any one of claims 1 to 9 to be implemented; or causes the method according to any one of claims 10 to 13 to be implemented.
